# EUROPEAN PATENT APPLICATION

(11) **EP 4 074 405 A1**
(43) Date of publication of application: **19.10.2022**
(21) Application number: 21020200.8
(22) Date of filing: 12.04.2021
(51) Int. Cl.: B01D 53/02, B01D 53/14, F25J 3/04

(54) **METHOD AND APPARATUS FOR OBTAINING A CARBON DIOXIDE PRODUCT**

(71) Applicant: Linde GmbH, 82049 Pullach (DE)
(72) Inventor: Kirchner, Lars, Dresden (DE)
(74) Representative: Imhof, Dietmar

(57) **Abstract**

A method for obtaining a carbon dioxide product using an air separation unit (100) comprising a main air compressor (1), a pre-purification unit (2) including an adsorber arrangement (21, 22), a main heat exchanger (3) and a rectification column system (4) is proposed. A stream of ambient air is compressed in the main air compressor (1) obtaining a stream of compressed ambient air, using at least a part of the stream of compressed ambient air a feed stream to the pre-purification unit (2) is formed, the pre-purification unit (2) is operated to at least periodically form a stream of pre-purified air and an off-gas stream, and at least a part of the stream of pre-purified air is cooled in the main heat exchanger (3) and rectified in the rectification column system (4). It is proposed to form the using a capture unit (5) from at least a part of the stream of compressed ambient air used in forming the feed stream to the pre-purification unit (2) and/or from at least a part of the off-gas stream formed in the pre-purification unit (2). A corresponding apparatus is also part of the present invention.

## Description

The present invention relates to a method for obtaining a carbon dioxide product and to a corresponding apparatus according to the preambles of the independent claims.

### Background of the invention

Resulting from the discussions about the global warming problem, mainly caused by an increasing carbon dioxide concentration in the atmosphere, technologies are currently developed to capture carbon dioxide from ambient air and to provide a carbon dioxide product for industrial use or for sequestration.

Such technologies in particular include the so-called direct air capture, i.e. a direct removal of carbon dioxide from air. Direct air capture involves adsorption or a mixture of adsorption and absorption, wherein a liquid absorbent is applied to a solid support and is held there by adhesion and/or cohesion forces. A corresponding combined separation principle is not limited to classical direct air capture but can also be used in other contexts within the scope of the present invention. Regeneration of a direct air capture unit is typically performed using heat. Amines or caustic solutions may be used as absorbents for direct air capture, as well as ionic liquids. For further details, reference is also made to technical literature, for example to the publication "Direct Air Capture of CO2 with Chemicals, a Technology Assessment for the Panel on Public Affairs" of the American Physical Society dated June 1, 2011.

Carbon dioxide obtained in direct air capture can generally be used for oil and gas applications including e.g. enhanced oil recovery, fracking applications, and so-called carbon capture and storage (CCS). Furthermore, liquid carbon dioxide (LIC) in technical or beverage grade may be provided.

It is an object of the present invention to increase the efficiency in the production of carbon dioxide from air, particularly including direct capture methods.

### Disclosure of the invention

Against this background, the present invention proposes a method for obtaining a carbon dioxide product and a corresponding apparatus according to the respective independent claims. Advantageous embodiments and additional advantageous features are the subject of the dependent claims as well as the following description.

Before the features and advantages of the invention are discussed in detail, some basic concepts and terminology forming the basis for the understanding of the present invention shall be introduced ad briefly discussed.

The production of air products in liquid or gaseous state by low-temperature separation of atmospheric air in air separation units is well known and described, for example, in H.-W. Haring (ed.), Industrial Gases Processing, Wiley-VCH, 2006, especially section 2.2.5, "Cryogenic Rectification".

Air separation plants comprise rectification column systems which can be designed, for example, as double-column systems, in particular as classical Linde double-column systems, but also as single-column, three-column or multi-column systems. All variants can generally be used in the context of the present invention. In addition to the rectification columns for the recovery of nitrogen and/or oxygen in liquid and/or gaseous state (for example liquid oxygen, LOX, gaseous oxygen, GOX, liquid nitrogen, LIN and/or gaseous nitrogen, GAN), i.e. the rectification columns for nitrogen-oxygen separation, rectification columns for the recovery of further air components, in particular the noble gases krypton, xenon and/or argon, can be provided.

The rectification column systems of typical air separation plants are operated at different operating pressures. Known double column systems comprise, for example, a so-called high-pressure column (also referred to as pressure column) and a so-called low-pressure column. The operating pressure of the high-pressure column is, for example, 4.3 to 6.9 bar, preferably about 5.0 bar. The low-pressure column is operated at an operating pressure of, for example, 1.3 to 1.7 bar, preferably about 1.5 bar. The pressures indicated here and in the following are in each case absolute pressures. Typically, prior to rectification, a pre-purification of air to be separated is performed in a so-called pre-purification unit (PPU) in order to remove impurities which would otherwise disturb the rectification or equipment used therefor.

A pre-purification unit used in a typical air separation unit comprises a set of adsorber vessels which are filled with a suitable adsorbent, such as a mole sieve. When compressed ambient air is passed through the adsorber vessels, components such as carbon dioxide and water are adsorbed to the adsorbent. From time to time, the adsorber vessels are regenerated using a hot regeneration gas stream to desorb the components previously adsorbed. In order to be able to continuously provide a stream of pre-purified air to be separated in the rectification column system, the adsorber vessels are operated in a cyclical manner, i.e. compressed ambient air is pre-purified in one adsorber vessel or a subset of adsorber vessels while a different adsorber vessel or a different subset of the adsorber vessel is regenerated. The adsorber vessel or a subset of adsorber vessels used for pre-purification and the adsorber vessel or a subset of adsorber vessels being regenerated are switched from time to time. The regeneration gas stream used in the pre-purification unit may be formed using so-called impure nitrogen formed in the rectification column system.

In air separation processes and plants, multi-stage turbo compressors are used to compress all the air to be separated, such compressors being referred to as "main air compressors" or "main compressors" for short. The mechanical design of turbocompressors is basically known to the expert. In a turbocompressor, the medium to be compressed is compressed by means of turbine blades or impellers, which are arranged on a turbine wheel or directly on a shaft. A turbocompressor forms a structural unit, but in a multi-stage turbocompressor this can comprise several compressor stages. A compressor stage usually comprises a turbine wheel or a corresponding arrangement of turbine blades. All these compressor stages can be driven by a common shaft. However, it may also be intended to drive the compressor stages in groups with different shafts, wherein the shafts may also be connected to each other via gears to rotate at different speeds.

The main air compressor is characterized by the fact that it compresses the entire quantity of air fed into the column system which is separated for the production of air products, i.e. the entire feed air. Accordingly, a "booster air compressor" or "post compressor" can also be provided, in which, however, only a part of the air volume compressed in the main air compressor is brought to an even higher pressure. This can also be a turbo compressor. For the compression of partial air volumes, further turbo compressors are typically provided, also referred to as boosters, but in comparison to the main air compressor or the booster air compressor, such further turbo compressors only compress air to a relatively small extent. The present invention can be used in arrangements with or without post compressors.

### Features and advantages of the invention

The current invention is based on the advantageous combination of a cryogenic air separation process with a capturing of carbon dioxide, thereby creating synergy effects and a positive impact on the total carbon dioxide balance of the process.

The present invention provides a method for providing a carbon dioxide product using an air separation unit comprising a main air compressor, a pre-purification unit including an adsorber arrangement, a main heat exchanger and a rectification column system, wherein a stream of ambient air is, as in a conventional air separation unit, compressed in the main air compressor obtaining a stream of compressed ambient air, wherein using at least a part of the stream of compressed ambient air a feed stream to the pre-purification unit is formed, wherein the pre-purification unit is operated to at least periodically form a stream of pre-purified air and an off-gas or impurities stream, and wherein at least a part of the stream of pre-purified air is cooled in the main heat exchanger and thereafter rectified in the rectification column system.

As to the function of the pre-purification unit used according to the present invention, reference is made to the explanations above. The stream of pre-purified air formed therein is particularly enriched in nitrogen, oxygen and noble gases as compared to the atmospheric air while being depleted or, essentially free from, further components such as water and/or carbon dioxide. The off-gas stream, in contrast, is enriched in said further components as compared to the atmospheric air and may comprise, depending on the regeneration gas used, oxygen and nitrogen.

According to the present invention, the carbon dioxide product is formed using a capture unit from at least a part of the stream of compressed ambient air used in forming the feed stream to the pre-purification unit and/or from at least a part of the off-gas stream formed in the pre-purification unit. A capture unit used according to the present invention may essentially resemble a direct air capture unit as known from the prior art as already explained above. In the capture unit, particularly a liquid absorbent may be applied to a solid carrier such as a mesh or a filter. Further details, particularly relating to the absorbent used, are explained below. As mentioned, direct air capture and carbon dioxide capturing technologies that may be used herein may comprise a mixture of adsorption and absorption. Therefore, the specific terms used are not intended to be limiting.

Both alternatives proposed according to the present invention provide substantial advantages over known processes.

The off-gas stream formed in the pre-purification unit already contains a much higher content in carbon dioxide as compared to typical ambient air. Particularly, the concentration of carbon dioxide in ambient or atmospheric air amounts to less than 0.05 % by volume, whereas its concentration in the off-gas stream formed in the pre-purification unit will typically be more than tenfold, twentyfold or up to hundredfold higher, thereby enabling a much more efficient recovery as compared to conventional direct air capture concepts. If, on the other hand, the recovery of carbon dioxide is effected upstream of the pre-purification unit, i.e. from at least a part of the stream of compressed ambient air used in forming the feed stream to the pre-purification unit, the equipment used for pre-purification downstream thereof can be dimensioned much smaller as there are by far less impurities to be removed from the resulting ambient air deprived of carbon dioxide.

Preferably, the recovering of carbon dioxide comprises contacting the carbon dioxide with one or more of the group of an amine, an alkaline hydroxide, an earth alkaline hydroxide, a metal-organic framework, a covalent organic framework, a zeolite, graphene oxide, functionalized carbon black, silica , and an anion exchange resin and/or separating carbon dioxide using a selectively permeable membrane. These are very efficient possibilities for recovering carbon dioxide selectively from a gas mixture. Typically such methods are applied in an alternating fashion such that the respective medium is contacted with a gas mixture containing carbon dioxide for a predefined contact period and the medium laden with carbon dioxide is regenerated, for example by a change of temperature, pressure or humidity, thereby releasing the carbon dioxide during a regeneration period. Advantageously, at least two separate processes are used in an alternating manner such that one process is in the contact period while the other is in the regeneration period.

Advantageously, forming the carbon dioxide product may further include at least one of compressing, cooling, liquefying and purifying a raw carbon dioxide product formed using the capture unit. The carbon dioxide product may be stored, sequestered and/or used in an industrial process. This enables removing the thus recovered carbon dioxide permanently from the atmosphere and/or putting the carbon dioxide to an advantageous use to provide valuable products.

Merely to repeat what was said above, the pre-purification in the pre-purification unit comprises alternatingly contacting the compressed ambient air with an adsorbent and a regeneration of the adsorbent, wherein the off-gas stream is generated during the regeneration of the adsorbent. Preferably, an impure nitrogen stream withdrawn from the rectification is used for the regeneration of the adsorbent. This is a particularly efficient way of pre-purifying air to be separated in a cryogenic air separation unit.

According to the invention, an apparatus for concentrating carbon dioxide obtained in conjunction with air separation, comprises a pre-purification unit configured to remove one or more impurities comprising at least water and carbon dioxide from ambient air comprising water, carbon dioxide and at least two constituents to be separated and to provide a stream of feed air comprising the at least two constituents to be separated, an air separation unit comprising at least one rectification unit configured to produce at least two fluid streams each enriched in at least one of the at least two constituents, respectively, from the feed air, and a carbon dioxide recovering unit configured to recover at least a part of the carbon dioxide from the air to be separated upstream the rectification, affording a raw carbon dioxide stream. It is, therefore, substantially adapted to carry out a method according to the invention as described above and, accordingly, profits from the same advantages.

Preferably, the apparatus further comprises means enabling the apparatus to carry out a method according to any one of the previously described advantageous embodiments and shares their respective advantages.

Further features and advantages of the invention will be discussed in the following with reference to appended drawings.

### Description of the drawings

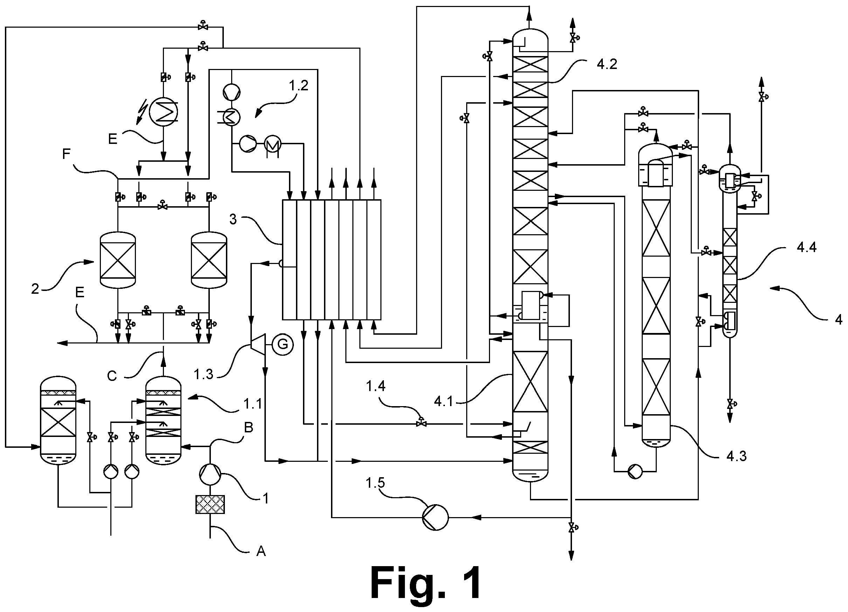

Figure 1 shows an example of an air separation unit of a type known per se and designated 100 which may be used in the context of the present invention.

Air separation plants of the type shown are often described elsewhere, for example in H.-W. Haring (ed.), Industrial Gases Processing, Wiley-VCH, 2006, in particular section 2.2.5, "Cryogenic Rectification". For detailed explanations of the design and mode of operation, please refer to the relevant technical literature. An air separation unit for use in the present invention can be designed in a wide variety of ways.

The air separation plant shown as an example in Figure 1 comprises, among other things, a main air compressor 1, a pre-cooling device 1.1, a pre-purification unit 2, a post-compressor arrangement 1.2, a main heat exchanger 3, an expansion turbine 1.3, a throttling device 1.4, a pump 1.5 and a rectification column system 4. In the example shown, the rectification column system 4 comprises a classical double column arrangement of a high pressure column 4.1 and a low pressure column 4.2 as well as a crude argon column 4.3 and a pure argon column 4.4.

In the air separation unit 100, a stream of ambient air A is compressed by means of the main air compressor 1 after having been passed through an undesignated filter to form a compressed air stream B. The compressed air stream B is supplied to the pre-cooling device 1.1 operated with cooling water. The pre-cooled feed air stream is at least in part fed as a feed stream C into the pre-purification system 2 and pre-purified therein, forming a pre-purified compressed air stream D and an off-gas stream E. The pre-purification unit 3 comprises a set of adsorber vessels used in cyclical operation, as mentioned above, which is regenerated using a regeneration gas stream F.

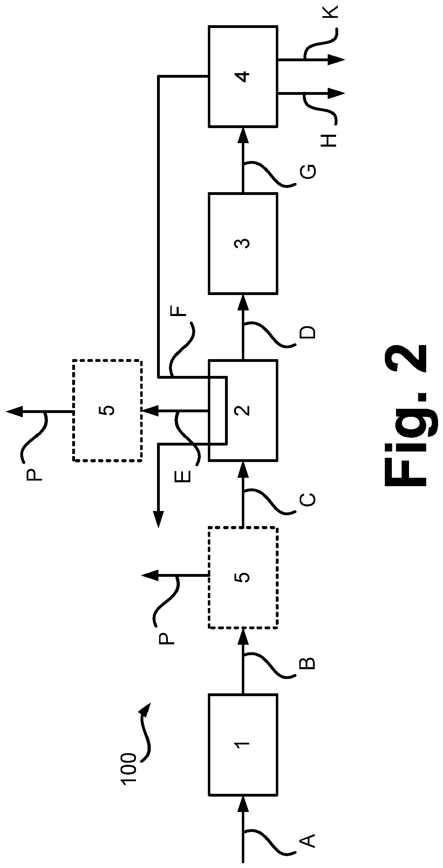

Downstream of the pre-purification system 2, the pre-purified feed air stream D is divided into two partial streams, partially further compressed, cooled in the main heat exchanger 3 and rectified, as generally known, in the rectification column system 4. Figure 2 shows an example of an apparatus according to an embodiment of the present invention which may include an air separation unit 100 such as the one shown in Figure 1. Of the air separation unit 100, only the main air compressor 1, the pre-purification unit 2, the main heat exchanger 3 and the rectification column system 4 are shown in a generalized manner.

The apparatus shown in Figure 2 is adapted to provide a carbon dioxide product P. The apparatus is adapted to compress a stream of ambient air A (see above for further details) in the main air compressor 1 obtaining a stream B of compressed ambient air, to form a feed stream C to the pre-purification unit 2 using at least a part of the stream of compressed ambient air B, to operate the pre-purification unit 2 to at least periodically form a stream D of pre-purified air and an off-gas stream E, and to cool, in the main heat exchanger 3, and thereafter rectify, in the rectification column system 4, at least a part of the stream D of pre-purified air shown as a stream G.

The pre-purification unit 2 is adapted to be regenerated using a regeneration gas stream F withdrawn from the rectification column system 4, as shown before, and form air products illustrated as streams H and K.

The apparatus comprises a capture unit 5 adapted to form the carbon dioxide product P from at least a part of the stream B of compressed ambient air used in forming the feed stream to the pre-purification unit 2 and/or from at least a part of the off-gas stream E formed in the pre-purification unit 2, as shown as alternatives of the present invention with dotted lines.

## Claims

1. A method for obtaining a carbon dioxide product using an air separation unit (100) comprising a main air compressor (1), a pre-purification unit (2) including an adsorber arrangement, a main heat exchanger (3) and a rectification column system (4), wherein a stream of ambient air is compressed in the main air compressor (1) obtaining a stream of compressed ambient air, wherein using at least a part of the stream of compressed ambient air a feed stream to the pre-purification unit (2) is formed, wherein the pre-purification unit (2) is operated to at least periodically form a stream of pre-purified air and an off-gas stream, and wherein at least a part of the stream of pre-purified air is cooled in the main heat exchanger (3) and thereafter rectified in the rectification column system (4), **characterized in that** the carbon dioxide product is formed using a capture unit (5) from at least a part of the stream of compressed ambient air used in forming the feed stream to the pre-purification unit (2) and/or from at least a part of the off-gas stream formed in the pre-purification unit (2).

2. Method according to claim 1, wherein in the capture unit (5) one or more adsorbents or absorbents of the group of an amine, an alkaline hydroxide, an alkaline earth hydroxide, a metal-organic framework, a covalent organic framework, a zeolite, graphene oxide, functionalized carbon black, silica, and an anion exchange resin and/or a selectively permeable membrane are used.

3. Method according to claim 1 or 2, wherein forming the carbon dioxide product further comprises at least one of compressing, cooling, liquefying and purifying a raw carbon dioxide product formed using the capture unit (5).

4. Method according to any of the preceding claims, wherein the carbon dioxide product is stored, sequestered or used in an industrial process.

5. Method according to any of the preceding claims, wherein the pre-purification comprises alternatingly contacting the ambient air with an adsorbent and a regeneration of the adsorbent, wherein the impurities stream is generated during the regeneration of the adsorbent.

6. An apparatus adapted to obtain a carbon dioxide product, comprising an air separation unit (100) including a main air compressor (1), a pre-purification unit (2) including an adsorber arrangement, a main heat exchanger (3) and a rectification column system (4), wherein the apparatus is adapted to compress a stream of ambient air in the main air compressor (1) obtaining a stream of compressed ambient air, to form a feed stream to the pre-purification unit (2) using at least a part of the stream of compressed ambient air, operate the pre-purification unit (2) to at least periodically form a stream of pre-purified air and an off-gas stream, and to cool, in the main heat exchanger (3), and thereafter rectify, in the rectification column system (4), at least a part of the stream of pre-purified air, **characterized in that** the apparatus comprises a capture unit (5) adapted to form the carbon dioxide product from at least a part of the stream of compressed ambient air used in forming the feed stream to the pre-purification unit (2) and/or from at least a part of the off-gas stream formed in the pre-purification unit (2).

7. Apparatus according to claim 8, further comprising means enabling the apparatus to carry out a method according to any one of claims 1 through 5.
